# EUROPÄISCHE PATENTSCHRIFT

(11) **EP 1 895 188 B1**
(45) Veröffentlichungstag und Bekanntmachung des Hinweises auf die Patenterteilung: **16.06.2010**
(21) Anmeldenummer: 07015853.0
(22) Anmeldetag: 11.08.2007
(51) Int. Cl.: F16F 9/348, F16F 9/46

(54) **Verstellbares Dämpfventil**
Adjustable damping valve
Clapet d'armortisseur réglable

(30) Priorität: 02.09.2006 DE 102006041205
(43) Veröffentlichungstag der Anmeldung: 05.03.2008
(73) Patentinhaber: ZF Friedrichshafen AG, 88038 Friedrichshafen (DE)
(72) Erfinder: Förster, Andreas, 97422 Schweinfurt (DE)

(56) Entgegenhaltungen:
- DE-A1- 19 961 963
- JP-A- 9 004 667
- US-A- 5 004 079

## Beschreibung

Die Erfindung betrifft ein verstellbares Dämpfventil gemäß dem Oberbegriff von Patentanspruch 1.

Bei einem Dämpfventil, das einen Anströmkanal aufweist, der in eine Ventilsitzfläche mündet, die von einem Ventilkörper zumindest teilweise abgeschlossen wird, hebt der besagte Ventilkörper ab einem gewissen Druckgefälle zwischen der Ventilkörpervorder- und Rückseite von der Ventilsitzfläche ab. Mit zunehmender Strömungsgeschwindigkeit in dem Spalt zwischen Ventilkörper und Ventilsitzfläche macht sich ein Schließeffekt bemerkbar, der der gewünschten Funktion eines Dämpfventils zuwiderläuft. Der beschriebene Schließeffekt tritt auch bei verstellbaren Dämpfventilen auf, deren Ventilkörper nicht nur von einem Druck eines Dämpfmediums beaufschlagt, sondern auch einer Verstellkraft ausgesetzt sind. Untersuchungen haben ergeben, dass die den Schließeffekt bedingenden Kräfte auf einem zur Aktuatorkraft vergleichsweise hohen Niveau liegen. Ein Lösungsgedanke könnte darin bestehen, dass man für das verstellbare Dämpfventil eine erhöhte Aktuatorkraft vorsieht, in der die Kraft für den Schließeffekt berücksichtigt ist und zusätzlich den Aktuator bezüglich des Schließeffekts ausregelt, um damit das Problem zu kompensieren. Eine derartige Lösung wäre aber sehr aufwändig und bedarf eines Sensors.

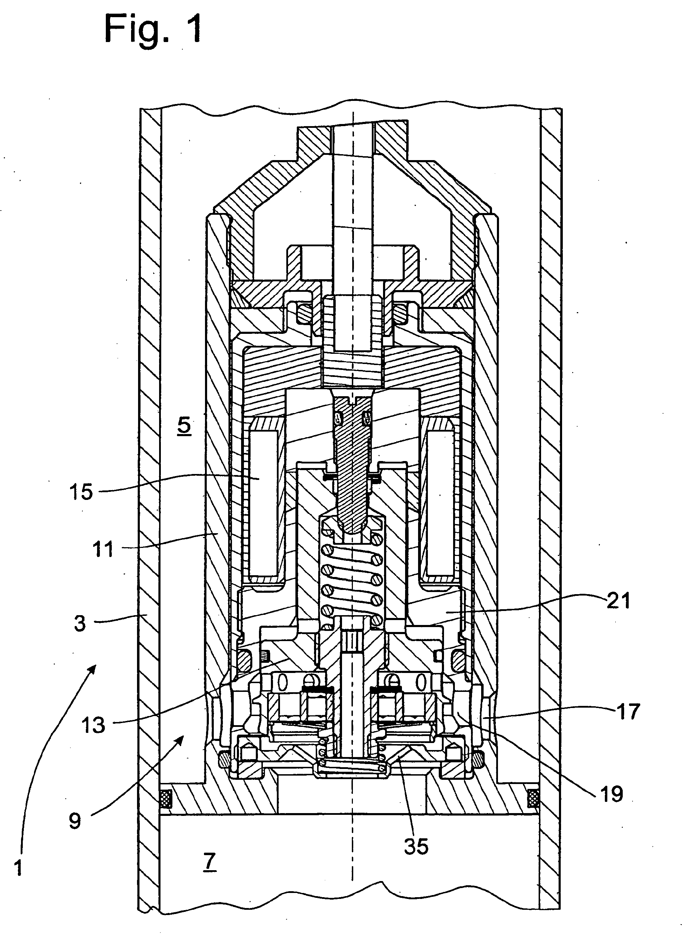

Die DE 199 61 963 A1 beschreibt ein Dämpfventil, umfassend einen Dämpfventilgrundkörper mit mindestens einem Durchströmkanal, der an mindestens einem Ende von einem Ventilkörper zumindest teilweise verschlossen wird, wobei der Ventilkörper bei einer Anströmung aus dem Durchströmkanal von einer Ventilsitzfläche abheben kann, wobei der Ventilkörper über eine zur Strömungsrichtung des Durchströmkanals abgewinkelte Strömungsleitfläche verfügt, die bei einem Volumenstrom des Dämpfmediums eine vom Dämpfmedium auf den Ventilkörper in Abhubrichtung von der Ventilsitzfläche wirkende Kraftkomponente erzeugt. Das Dämpfventil ist, wie aus der Fig. 1 erkennbar ist, in einem Bypass zu einem Bodenventil und einem Kolbenventil angeordnet, so dass das Dämpfventil ein einzige Durchströmungsrichtung aufweist.

In der JP 09004667 ist ein verstellbares Dämpfventil offenbart, das an einem beweglichen Ventilkörper eine profilierte Fläche aufweist, an der der Betriebsdruck des Dämpfmediums ansteht. Die profilierte Fläche steht nur für eine Strömungsrichtung im Dämpfventil zur Verfügung.

Aufgabe der vorliegenden Erfindung ist es ein Dämpfventil zu realisieren, bei dem der beschriebene Schließeffekt minimiert ist.

Erfindungsgemäß wird die Aufgabe dadurch gelöst, dass der Ventilkörper über eine zur Strömungsrichtung des Durchströmkanals abgewinkelte Strömungsleitfläche verfügt, die bei einem Volumenstrom des Dämpfmediums eine vom Dämpfmedium auf den Ventilkörper in Abhubrichtung von der Ventilsitzfläche wirkende Kraftkomponente erzeugt, wobei der Ventilkörper für beide Strömungsrichtungen mindestens eine Strömungsleitfläche aufweist.

Man nutzt eine in der Größe von der Strömungsgeschwindigkeit abhängige Impulskraft des Dämpfmediums, so dass eine sehr gute Kompensation des ebenfalls geschwindigkeitsabhängigen Schließeffekts am Ventilkörper erreicht werden kann.

Gemäß einem Unteranspruch ist die Strömungsleitfläche im Strömungsweg des Dämpfmediums nach der Ventilsitzfläche ausgeführt. Damit besteht die Möglichkeit, dass für ein Ventil mit zwei Durchströmrichtungen jeweils getrennte Strömungsleitflächen verwenden werden können, die ggf. eine unterschiedlich große lmpulskraft auf den Ventilkörper ausüben.

Der Ventilkörper weist mindestens einen Steg auf, an dem die Strömungsleitfläche ausgeführt ist. Man kann den Steg bevorzugt als umlaufende Rippe ausführen.

Um am Ventilkörper im statischen Zustand einen Druckausgleich an den druckbeaufschlagten Flächen zu erreichen, läuft der Steg auf der der Strömungsleitfläche abgewandten Seite auf demselben Durchmesser aus wie im Bereich der Strömungsleitfläche.

Zusätzlich kann der Durchströmkanal mindestens eine Umlenkfläche für das Dämpfmedium in Richtung der Strömungsleitfläche aufweisen. Durch die Verwendung einer Umlenkfläche bestehen größere konstruktive Freiheiten bei der Gestaltung des Ventilkörpers.

Je nach Strömungsrichtung des Dämpfmediums ist es sinnvoll, wenn am Ventilkörper eine von der Strömungsleitfläche verschiedene Umlenkfläche vorliegt.

Dabei ist die Umlenkfläche der Strömungsleitfläche in Strömungsrichtung des Dämpfmediums nachgeordnet. Diese Ausgestaltung ist insbesondere dann interessant, wenn die Geometrie im Dämpfventil keine Umlenkfläche an einem ortsfesten Bauteil zulässt.

Des Weiteren ist vorgesehen, dass die Umlenkfläche im Strömungsweg des Dämpfmediums nach der Ventilsitzfläche ausgeführt ist.

Der Dämpfventilgrundkörper und der Ventilkörper sind in einem Dämpfventilgehäuse ausgeführt, wobei das Dämpfventilgehäuse mindestens eine Anschlussöffnung zum Durchströmkanal aufweist. An einem zum Dämpfventilgehäuse ortsfesten Bauteil ist eine winkelförmige Umlenkfläche ausgeführt. Zwischen dem Dämpfventilgehäuse und dem Ventilelement besteht ein Ringraum, in dem das umgelenkte Dämpfmedium auf die Strömungsleitfläche am Ventilkörper trifft.

Anhand der folgenden Figurenbeschreibung soll die Erfindung näher erläutert werden:

Es zeigt:
- Fig. 1: verstellbares Dämpfventil in Gesamtdarstellung
- Fig. 2 und 3: Detaildarstellung des Ventilelements von der Fig. 1

Die Fig. 1 zeigt einen Ausschnitt aus einem Schwingungsdämpfer 1 beliebiger Bauart, dessen Zylinder 3 zwei Arbeitsräume 5; 7 aufweist, die mit einem gasförmigen oder hydraulischen Dämpfmedium gefüllt sind. Funktional zwischen den beiden Arbeitsräumen ist ein verstellbares Dämpfventil 9 angeordnet, das in einem Dämpfventilgehäuse 11 einen axial verschiebbaren Ventilkörper 13 aufweist. Der Ventilkörper kann durch Bestromung einer Spule 15 stufenlos, oder wenn gewünscht, gestuft verstellt werden und damit mindestens eine Anschlussöffnung 17 im Gehäuse 11, die in Wirkverbindung mit Durchströmkanälen 19 eines Dämpfventilgrundkörpers 21 steht, freischalten oder verschließen.

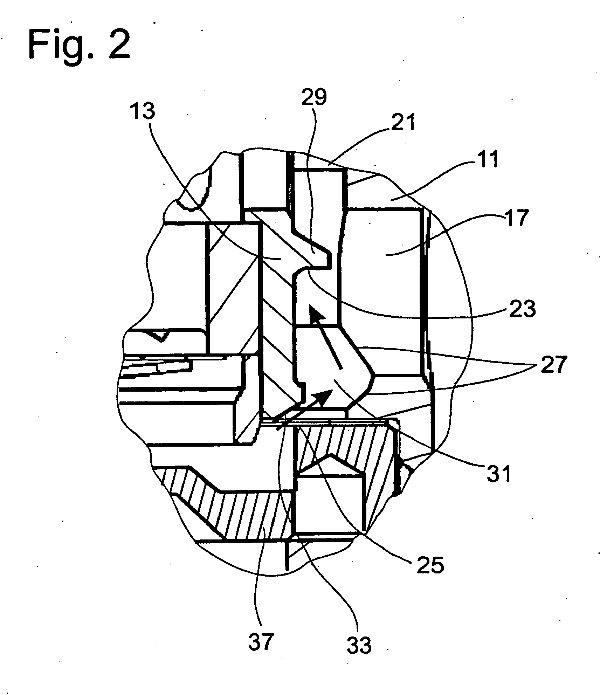

Bei der Strömung durch ein Dämpfventil tritt häufig der Effekt auf, dass das Dämpfmedium bei größeren Strömungsgeschwindigkeiten eine Schließkraft auf den Ventilkörper ausübt. Um dieses Problem zu lösen, verfügt der Ventilkörper 13, wie in der Fig. 2 vergrößert dargestellt ist, über eine zur Strömungsrichtung des Durchströmkanals 19 abgewinkelte Strömungsleitfläche 23, die bei Druckbeaufschlagung eine vom Dämpfmedium in Abhubrichtung des Ventilkörpers 13 von einer Ventilsitzfläche 25 wirkende Kraftkomponente erzeugt.

Die Pfeile symbolisieren den Dämpfmediumstrom durch das verstellbare Dämpfventil 9. Wie man sehen kann, ist die Strömungsleitfläche 23 im Strömungsweg des Dämpfmediums nach der Ventilsitzfläche 25 ausgeführt, d. h. dass das Dämpfmedium die Drosselstelle des verstellbaren Dämpfventils 9 bereits passiert hat, wenn es auf die Strömungsleitfläche 23 auftritt. In der vorliegenden Strömungsrichtung des Dämpfmediums durch das verstellbare Dämpfventil liegt die Strömungsleitfläche 23 nicht im direkten Strömungsweg. Deshalb verfügt das verstellbare Dämpfventil über eine Umlenkfläche 27, die im Strömungsweg des Dämpfmediums ebenfalls nach der Ventilsitzfläche 25 ausgeführt ist. Die Strömungsleitfläche 23 für diese Durchströmungsöffnung 19 des verstellbaren Dämpfventils ist Teil eines radialen Stegs 29 an dem Ventilkörper 13, wobei der Steg 29 bevorzugt am gesamten Außendurchmesser umlaufend ausgeführt ist. Der Steg 29 läuft im Bereich der Strömungsleitfläche auf demselben Durchmesser aus wie auf der der Strömungsfläche abgewandten Seite, so dass keine Kraftkomponente aufgrund unterschiedlich großer druckbeaufschlagter Flächen entstehen kann.

Wie bereits beschrieben, sind der Dämpfventilgrundkörper 21 und der Ventilkörper 13 in dem Dämpfventilgehäuse 11 ausgeführt, wobei das Dämpfventilgehäuse 11 die mindestens eine Anschlussöffnung 17 zum Durchströmkanal 19 aufweist. An einem zum Dämpfventilgehäuse ortsfesten Bauteil ist die winkelförmige Umlenkfläche 27 ausgeführt, die für die Strömung des Dämpfmediums auf die Strömungsleitfläche 23 sorgt. Das ortsfeste Bauteil wird von dem Dämpfventilgehäuse 11 gestellt, das eine Hohlkehle aufweist, an der die Umlenkflächen 27 ausgeführt sind. Dadurch entsteht ein Ringraum 31 zwischen der Innenseite des Dämpfventilgehäuses 11 und der äußeren Mantelfläche des Ventilkörpers 13, so dass der gesamte Ventilkörper von der Impulskraft beaufschlagt wird. Eine einseitig wirkende Radialkraft wird dadurch wirksam verhindert. Bei der Anströmung des Ventilkörpers 13 treten Impulskräfte auf, die eine Kraftkomponente in Öffnungsrichtung des Ventilkörpers entfalten und damit dem Zuzieheffekt entgegenwirken.

Bei geschlossenem Dämpfventil 9 liegt der Ventilkörper 13 mit einer Ventilfläche 33 auf der Ventilsitzfläche 25 auf. Das Dämpfmedium kann über Öffnungen 35 (Fig. 1) in einer Ventilsitzscheibe 37 zum Ventilkörper 13 fließen. Die Strömungsleitfläche 23 ist dabei nicht wirksam, da sie hinter der Ventilsitzfläche 25 liegt. Sobald der Ventilkörper 13 von der Ventilsitzfläche 25 abhebt, strömt zumindest ein Teil des Dämpfmediums, wie durch die Pfeile dargestellt ist, in Richtung der Umlenkfläche 27 und bewirkt unter Ausnutzung der Strömungsleitfläche 23 am Ventilkörper 13 eine Impulskraft auf den Ventilkörper 13, wobei die Impulskraft abhängig ist von der Strömungsgeschwindigkeit des Dämpfmediums.

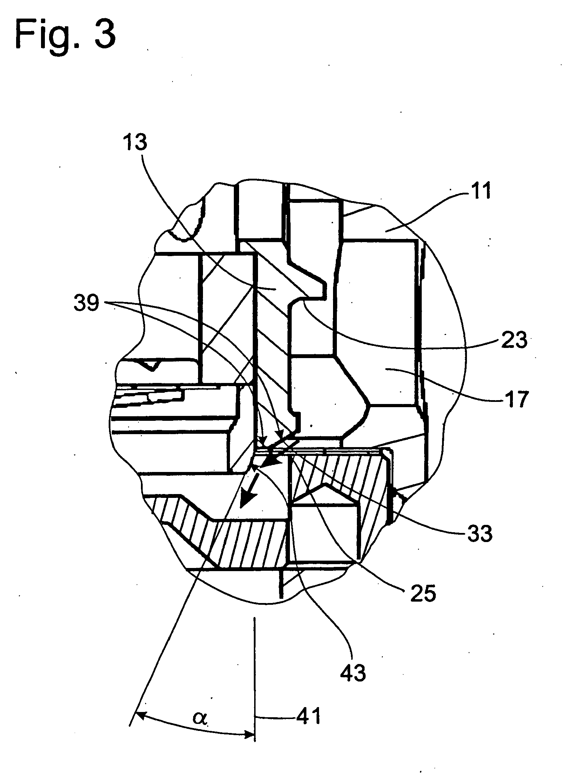

Aus der Fig. 3 ist ersichtlich, dass der Ventilkörper 13 für beide Strömungsrichtungen mindestens eine Strömungsleitfläche 23; 39 und eine Umlenkfläche 23; 43 aufweist. Ausgehend von der Ventilfläche 33 des Ventilkörpers 13 erstreckt sich die schräg zur Längsachse 41 des Dämpfventil verlaufende Umlenkfläche 43, die in Strömungsrichtung der Strömungsleitfläche nachgeordnet ist. Bei einer radialen Anströmung über die Ventilsitzfläche 25 wird der Dämpfmediumstrom an der Fläche 43 umgelenkt und ebenfalls als eine Impulskraft auf die Strömungsleitflächen 39 ausgenutzt, die in Öffnungsrichtung des Ventilkörpers 13 wirkt. Die Strömungsleitfläche 39 wird dabei teilweise von der Ventilfläche 33 und einem horizonalen Übergangsbereich zur Umlenkfläche 43 gebildet. Durch Anpassen des Winkels α kann die Wirkung der Impulskraft variiert werden. Bei einem Winkel α = 0 ° liegt die maximale Impulskraft vor.

Generell gilt bei allen Ausführungen, dass die Umlenkfläche die Strömungsrichtung des Dämpfmediums beeinflusst und auf die Strömungsleitfläche die Öffnungskraft wirkt.

## Patentansprüche

1. Dämpfventil (9), umfassend einen Dämpfventitgrundkörper (21) mit mindestens einem Durchströmkanal (19), der an mindestens einem Ende von einem Ventilkörper (13) zumindest teilweise verschlossen wird, wobei der Ventilkörper (13) bei einer Anströmung aus dem Durchströmkanal (19) von einer Ventilsitzfläche (25) abheben kann, wobei der Ventilkörper (13) über eine zur Strömungsrichtung des Durchströmkanals (19) abgewinkelte Strömungsleitfläche (23; 39) verfügt, die bei einem Volumenstrom des Dämpfmediums eine vom Dämpfmedium auf den Ventilkörper (13) in Abhubrichtung von der Ventilsitzfläche (25) wirkende Kraftkomponente erzeugt,
**dadurch gekennzeichnet,**
**dass** der Ventilkörper (13) für beide Strömungsrichtungen mindestens eine Strömungsleitfläche (23; 39) aufweist.

2. Dämpfventil nach Anspruch 1,
**dadurch gekennzeichnet,**
**dass** die Strömungsleitfläche (23; 39) im Strömungsweg des Dämpfmediums nach der Ventilsitzfläche (25) ausgeführt ist.

3. Dämpfventil nach Anspruch 1,
**dadurch gekennzeichnet,**
**dass** der Ventilkörper (13) mindestens einen Steg (23) aufweist, an dem die Strömungsleitfläche (23) ausgeführt ist.

4. Dämpfventil nach Anspruch 3,
**dadurch gekennzeichnet,**
**dass** der Steg (29) auf der der Strömungsleitfläche (23) abgewandten Seite auf demselben Durchmesser ausläuft wie im Bereich der Strömungsleitfläche (23).

5. Dämpfventil nach Anspruch 1,
**dadurch gekennzeichnet,**
**dass** der Durchströmkanal (19) mindestens eine Umlenkfläche (27) für das Dämpfmedium in Richtung der Strömungsleitfläche (23) aufweist.

6. Dämpfventil nach Anspruch 1,
**dadurch gekennzeichnet,**
**dass** am Ventilkörper (13) eine von der Strömungsleitfläche (39) verschiedene Umlenkfläche (43) vorliegt.

7. Dämpfventil nach Anspruch 5,
**dadurch gekennzeichnet,**
**dass** die Umlenkfläche (43) der Strömungsleitfläche (39) in Strömungsrichtung des Dämpfmediums nachgeordnet ist.

8. Dämpfventil nach Anspruch 5,
**dadurch gekennzeichnet,**
**dass** die Umlenkfläche (27) im Strömungsweg des Dämpfmediums nach der Ventilsitzfläche (25) ausgeführt ist.

9. Dämpfventil nach Anspruch 5,
**dadurch gekennzeichnet,**
**dass** der Dämpfventilgrundkörper (21) und das Ventilelement (13) in einem Dämpfventilgehäuse (21) ausgeführt sind, wobei das Dämpfventilgehäuse (21) mindestens eine Anschlussöffnung (17) zum Durchströmkanal (19) aufweist und an einem zum Dämpfventilgehäuse (21) ortsfesten Bauteil eine winkelförmige Umlenkfläche (27) ausgeführt ist.

## Claims

1. Damping valve (9), comprising a damping-valve basic body (21) with at least one throughflow duct (19) which is at least partially closed at at least one end by a valve body (13), the valve body (13) being capable of lifting off from a valve-seat surface (25) in the event of an onflow out of the throughflow duct (19), the valve body (13) having a flow guide surface (23; 39) which is angled with respect to the direction of flow of the throughflow duct (19) in which, in the event of a volume flow of the damping medium, generates a force component acting from the damping medium upon the valve body (13) in the direction of lift-off from the valve-seat surface (25), **characterized in that** the valve body (13) has at least one flow guide surface (23; 39) for both directions of flow.

2. Damping valve according to Claim 1, **characterized in that** the flow guide surface (23; 39) is formed downstream of the valve-seat surface (25) in the flow path of the damping medium.

3. Damping valve according to Claim 1, **characterized in that** the valve body (13) has at least one web (23), on which the flow guide surface (23) is formed.

4. Damping valve according to Claim 3, **characterized in that** the web (29) runs out on the same diameter on the side facing away from the flow guide surface (23) as in the region of the flow guide surface (23).

5. Damping valve according to Claim 1, **characterized in that** the throughflow duct (19) has at least one deflecting surface (27) for the damping medium in the direction of the flow guide surface (23).

6. Damping valve according to Claim 1, **characterized in that** a deflecting surface (43) different from the flow guide surface (39) is present on the valve body (13).

7. Damping valve according to Claim 5, **characterized in that** the deflecting surface (43) follows the flow guide surface (39) in the direction of flow of the damping medium.

8. Damping valve according to Claim 5, **characterized in that** the deflecting surface (27) is formed downstream of the valve-seat surface (25) in the flow path of the damping medium.

9. Damping valve according to Claim 5, **characterized in that** the damping-valve basic body (21) and the valve element (13) are formed in a damping-valve housing (21), the damping-valve housing (21) having at least one connecting orifice (17) to the throughflow duct (19), and an angular deflecting surface (27) being formed on a component which is fixed in place with respect to the damping-valve housing (21).

## Revendications

1. Clapet amortisseur (9), comprenant un corps de base de clapet amortisseur (21), avec au moins un canal de passage (19), qui est fermé au moins partiellement à au moins une extrémité par un corps de clapet (13), le corps de clapet (13) pouvant, en cas d'afflux depuis le canal de passage (19), se soulever d'une surface de siège de clapet (25), le corps de clapet (13) disposant d'une surface de guidage de l'écoulement (23 ; 39) coudée par rapport à la direction d'écoulement du canal de passage (19), laquelle produit dans le cas d'un débit de fluide d'amortissement, une composante de force agissant depuis le fluide d'amortissement sur le corps de clapet (13) dans la direction de soulèvement de la surface de siège de clapet (25),
**caractérisé en ce que**
le corps de clapet (13) présente au moins une surface de guidage de l'écoulement (23 ; 39) pour les deux sens d'écoulement.

2. Clapet amortisseur selon la revendication 1,
**caractérisé en ce que**
la surface de guidage de l'écoulement (23 ; 39) est réalisée dans le chemin de l'écoulement du fluide d'amortissement après la surface de siège de clapet (25).

3. Clapet amortisseur selon la revendication 1,
**caractérisé en ce que**
le corps de clapet (13) présente au moins une nervure (29) sur laquelle est réalisée la surface de guidage de l'écoulement (23).

4. Clapet amortisseur selon la revendication 3,
**caractérisé en ce que**
la nervure (29) du côté opposé à la surface de guidage de l'écoulement (23) se termine avec le même diamètre que dans la région de la surface de guidage de l'écoulement (23).

5. Clapet amortisseur selon la revendication 1,
**caractérisé en ce que**
le canal de passage (19) présente au moins une surface de déflexion (27) pour le fluide d'amortissement dans la direction de la surface de guidage de l'écoulement (23).

6. Clapet amortisseur selon la revendication 1,
**caractérisé en ce**
**qu'**une surface de déflexion (43) différente de la surface de guidage de l'écoulement (39) est prévue sur le corps de clapet (13).

7. Clapet amortisseur selon la revendication 5,
**caractérisé en ce que**
la surface de déflexion (43) est placée en aval de la surface de guidage de l'écoulement (39) dans le sens d'écoulement du fluide d'amortissement.

8. Clapet amortisseur selon la revendication 5,
**caractérisé en ce que**
la surface de déflexion (27) est réalisée dans le chemin d'écoulement du fluide d'amortissement après la surface de siège de clapet (25).

9. Clapet amortisseur selon la revendication 5,
**caractérisé en ce que**
le corps de base de clapet amortisseur (21) et l'élément de clapet (13) sont réalisés dans un boîtier de clapet amortisseur (21), le boîtier de clapet amortisseur (21) présentant au moins une ouverture de raccordement (17) au canal de passage (19), et une surface de déflexion (27) de forme angulaire étant réalisée sur un composant fixe par rapport au boîtier de clapet amortisseur (21).
